# EUROPÄISCHE PATENTSCHRIFT

(11) **EP 2 012 096 B1**
(45) Veröffentlichungstag und Bekanntmachung des Hinweises auf die Patenterteilung: **26.10.2016**
(21) Anmeldenummer: 08163861.1
(22) Anmeldetag: 26.03.1999
(51) Int. Cl.: G01F 15/14, G01F 1/58

(54) **Magnetisch-induktiver Durchflußaufnehmer**
Magnetic-inductive flow rate value transmitter
Capteur de débit magnétique-inductif

(43) Veröffentlichungstag der Anmeldung: 07.01.2009
(62) Teilanmeldung aus: 99105159.0
(73) Patentinhaber: Endress+Hauser Flowtec AG, 4153 Reinach (BL) (CH)
(72) Erfinder: Magliocca, Antonio, 4055 Basel (CH); Frey, Daniel, 4410 Liestal (CH)
(74) Vertreter: Andres, Angelika Maria

(56) Entgegenhaltungen:
- EP-A- 0 047 342
- EP-A- 0 255 275
- EP-A- 0 581 017
- EP-A- 0 895 066
- JP-A- 3 276 023
- JP-A- 59 137 822

## Beschreibung

Die Erfindung betrifft einen magnetisch-induktiven Durchflußaufnehmer.

Mittels magnetisch-induktiven Durchflußaufnehmer läßt sich bekanntlich der Volumendurchfluß eines elektrisch leitfähigen Fluids messen, das ein Meßrohr dieses Durchflußaufnehmers gerichtet durchströmt. Hierzu wird am Durchflußaufnehmer mittels einer an eine Erreger-Elektronik angekoppelten Magnetkreisanordnung ein Magnetfeld von möglichst hoher Dichte erzeugt, das das Fluid innerhalb eines Meßvolumens abschnittsweise, insb. im Bereich mit hoher Strömungsgeschwindigkeit, senkrecht zu dessen Strömungsrichtung durchsetzt und das sich im Wesentlichen außerhalb des Fluids schließt. Das Meßrohr besteht daher aus nicht-ferromagnetischem Material, damit das Magnetfeld beim Messen nicht ungünstig beeinflußt wird.

Aufgrund der Bewegung der freien Ladungsträger des Fluids im Magnetfeld wird nach dem magneto-hydrodynamischen Prinzip im Meßvolumen ein elektrisches Feld bestimmter Stärke erzeugt, das senkrecht zum Magnetfeld und senkrecht zur Strömungsrichtung des Fluids verläuft. Mittels zweier in Richtung des elektrischen Feldes voneinander beabstandet angeordneter Elektroden und mittels einer an diese angeschlossenen Auswerte-Elektronik ist somit eine im Fluid induzierte elektrische Spannung meßbar. Diese Spannung ist ein Maß für den Volumendurchfluß. Zum Abgreifen der induzierten Spannung dienen entweder das Fluid berührende, galvanische oder das Fluid nicht berührende, kapazitive Elektroden. Der Durchflußaufnehmer ist so aufgebaut, daß sich das induzierte elektrische Feld außerhalb des Fluids praktisch nur über die an die Elektroden angeschlossene Auswerte-Elektronik schließt.

Zum Führen und wirksamen Einkoppeln des Magnetfeldes in das Meßvolumen umfaßt die Magnetkreisanordnung üblicherweise zwei Spulenkerne, die entlang eines Umfanges des Meßrohrs insb. diametral, voneinander beabstandet und mit jeweils einer freien endseitigen Stirnfläche, insb. spiegelbildlich, zueinander angeordnet sind.

In die Spulenkerne wird mittels einer an die Erreger-Elektronik angeschlossener Spulenanordnung das Magnetfeld so eingekoppelt, daß es das zwischen beiden Stirnflächen hindurchströmende Fluid wenigstens abschnittsweise senkrecht zur Strömungsrichtung durchsetzt.

In der EP-A-0 255 275 ist ein magnetisch-induktiver Durchflußaufnehmer beschrieben, der umfaßt:
- ein in eine Rohrleitung druckdicht einfügbares, ein einlaßseitiges erstes Ende und ein auslaßseitiges zweites Ende aufweisendes Meßrohr, das
   -- ein nicht-ferromagnetisches Trägerrohr als eine äußere Umhüllung des Meßrohrs,
   -- einen in einem Lumen des Trägerrohrs untergebrachten, aus einem Isoliermaterial bestehenden rohrförmigen Liner zum Führen eines strömenden und vom Trägerrohr isolierten Fluids enthält
- eine am Meßrohr angeordnete Magnetkreisanordnung zum Erzeugen und Führen eines magnetischen Feldes, das im strömenden Fluid ein elektrisches Feld induziert, die
   -- eine erste Spule,
   -- eine zweite Spule,
- einen an die Spulen magnetisch gekoppelten, eine endseitige, mindestens abschnittsweise gewölbte erste Stirnfläche aufweisenden ferromagnetischen ersten Spulenkern und
   -- einen an die Spulen magnetisch gekoppelten, eine endseitige, mindestens abschnittsweise gewölbte zweite Stirnfläche aufweisenden ferrormagnetischen zweiten Spulenkern umfaßt, und
- eine erste Elektrode und eine zweite Elektrode für das Abgreifen einer Spannung vom elektrischen Feld,
- wobei der erste Spulenkern mit einem von dessen Stirnfläche ausgehenden, endseitigen ersten Spulenkern-Abschnitt durch eine erste Mantel-Öffnung des Trägerrohrs hindurch in einen ersten Spulenkern-Sitz eingesetzt ist
- wobei der zweite Spulenkern mit einem von dessen Stirnfläche ausgehenden, endseitigen ersten Spulenkern-Abschnitt durch eine zweite Mantel-Öffnung Trägerrohrs hindurch in einen zweiten Spulenkern-Sitz eingesetzt ist.

Aufgrund der geforderten hohen mechanischen Stabilität für solche Meßrohre, bestehen diese bevorzugt aus einem äußeren, insb. metallischen, Trägerrohr von vorgebbarer Festigkeit und Weite, das innen mit einem elektrisch nichtleitenden Isoliermaterial von vorgebbarer Dicke, dem sogenannten Liner, beschichtet ist.

So ist in der US-A 32 13 685 ein magnetisch-induktiver Durchflußaufnehmer beschrieben, der umfaßt:
- ein in eine Rohrleitung druckdicht einfügbares, ein einlaßseitiges erstes Ende und ein auslaßseitiges zweites Ende aufweisendes Meßrohr, das
   -- ein nicht-ferromagnetisches Trägerrohr als eine äußere Umhüllung des Meßrohrs,
   -- einen in einem Lumen des Trägerrohrs untergebrachten, aus einem Isoliermaterial bestehenden rohrförmigen Liner zum Führen eines strömenden und vom Trägerrohr isolierten Fluids und
   --einen zur Stabilisierung des Liners in diesen eingebetteten Stützkörper enthält,
- eine am Meßrohr angeordnete Magnetkreisanordnung zum Erzeugen und Führen eines magnetischen Feldes, das im strömenden Fluid ein elektrisches Feld induziert und
- eine erste Elektrode und eine zweite Elektrode für das Abgreifen einer Spannung vom elektrischen Feld.

Der Liner dient der chemischen Isolierung des Trägerrohrs vom Fluid. Bei Trägerrohren von hoher elektrischer Leitfähigkeit, insb. bei metallischen Trägerrohren, dient der Liner außerdem als elektrische Isolierung zwischen dem Trägerrohr und dem Fluid, die ein Kurzschließen des elektrischen Feldes über das Trägerrohr verhindert.

Durch eine entsprechende Auslegung des Trägerrohrs ist somit eine Anpassung der Festigkeit des Meßrohrs an die im jeweiligen Einsatzfall vorliegenden mechanischen Beanspruchungen realisierbar, während mittels des Liners eine Anpassung des Meßrohrs an die für den jeweiligen Einsatzfall geltenden chemischen, insb. hygienischen, Anforderungen realisierbar ist.

Der Liner, der aus einem Kunststoff als Isoliermaterial besteht, wird üblicherweise mit einem darin vollständig eingebetteten, offenporigen, insb. metallischen, Stützkörper hergestellt. Dieser dient dazu, den Liner, insb. gegenüber Druckänderungen und thermisch bedingten Volumenänderungen, mechanisch zu stabilisieren. So ist z.B in der JP-Y 53 - 51 181 ein rohrförmiger Stützkörper gezeigt, in dessen Mantelflächen Bohrungen eingebracht sind. Dieser Stützkörper ist im Meßrohr mit diesem fluchtend eingebracht und vom Isoliermaterial vollständig umschlossen.

In der EP-A-0 581 017 ist ein Durchflußaufnehmer umfassend ein Messrohr und einen Liner offenbart, wobei der Liner an der Innenseite des Messrohrs abschnittsweise Verstärkungen aufweist, die aus einem offenporigen Material sind.

Zur Optimierung der Dichte des Magnetfeldes und damit zur Verbesserung der Empfindlichkeit des Durchflußaufnehmers sind die Stirnflächen der Spulenkerne als Polschuhe mit möglichst großer Fläche und mit bestimmter Wölbung ausgeführt. Durch geeignete Ausformung dieser Wölbung kann so die Dichte des Magnetfeldes im Meßvolumen gezielt optimiert werden. Dadurch wird auch das räumliche elektrische Feld und somit die Abhängigkeit der im Fluid induzierten Spannung von dessen Strömungsgeschwindigkeit optimiert.

Die räumliche Ausbildung des Magnetfeldes im Fluid und damit auch die Genauigkeit des Durchflußaufnehmers werden neben der räumlichen Gestalt der beiden Stirnflächen u.a. auch durch deren gegenseitigen Abstand bestimmt. Je weiter die Stirnflächen voneinander entfernt angeordnet sind, desto schwächer bildet sich das elektrische Feld aus und desto höher wird die Empfindlichkeit der gemessenen Spannung gegenüber Störungen, z.B. Änderungen im Strömungsverhalten oder Temperaturschwankungen im Fluid.

Zur Erhöhung der Genauigkeit des Durchflußaufnehmers sind daher die Stirnflächen einerseits minimal voneinander zu beabstanden und andererseits ist deren Wölbung möglichst genau der jeweils optimalen anzupassen. Bei handelsüblichen Durchflußaufnehmern werden daher die Polschuhe so ausgeführt und am Meßrohr angeordnet, daß deren Stirnflächen direkt auf dem Liner aufliegen und dabei im wesentlichen entsprechend dessen äußerer Kontur geformt sind, vgl. z.B. die US-A 48 25 703.

In der US-A 56 64 315 ist ein Verfahren zum Herstellen eines Meßrohrs eines magnetisch-induktiven Durchflußaufnehmers, das innen einen Liner aufweist, beschrieben, bei dem vor dem Einbringen des Liners in das Trägerrohr ein den Liner mechanisch stabilisierendes Streckmetall-Gitter als vorgefertigter Stützkörper angebracht wird. Das Einbringen des Liners erfolgt durch Einfüllen und Erstarrenlassen eines verflüssigten Isoliermaterials in das Meßrohr, das den Stützkörper nach dem Erstarren umschließt und so den Liner bildet. Bevorzugt werden zur Fertigung des Liners Injection-Molding- oder Transfer-Molding-Verfahren angewendet.

Es ist jedoch auch üblich, einen vollständig vorgefertigten Liner in das Trägerrohr einzusetzen. So ist in der JP 59 137 822 A ein Verfahren gezeigt, bei dem der Liner durch Aufweichen einer äußeren und einer inneren, einen rohrförmigen porösen Stützkörper aus Edel-Stahl umschließenden Kunststoffolie gebildet wird.

Es hat sich zwar einerseits gezeigt, daß Liner der beschriebenen Art im Betrieb eine sehr hohe mechanischelangzeitstabilität, auch in Temperaturbereichen von ∼40°C bis zu 200 °C bei entsprechenden Temperatursprüngen besitzen, andererseits aber ist das Einbringen eines separat gefertigten Stützkörpers in das und dessen Arretieren im Tägerrohr mit einem sehr hohen Fertigungsaufwand verbunden. Dies umso mehr, je höher die Anforderungen an die Paßgenauigkeit des Stützkörpers im Trägerrohr sind.

Es hat sich ferner gezeigt, daß mit der Anordnung der Spulenkerne auf dem Liner, insb. bei einem großen Verhältnis der Weite des Trägerrohrs zur Weite des Stützkörpers bzw. des Liners und bei kleiner Strömungsgeschwindigkeit des Fluids, erhöhte Meßfehler auftreten können.

Die Aufgabe der Erfindung besteht darin, einen magnetisch-induktiven Durchflußaufnehmer anzugeben, bei dem beliebig geformte Spulenkerne, insb. mit gewölbten Stirnflächen, in den Stützkörper des Liners mit vorgebbarer Tiefe stirnseitig und formschlüssig eingelassen sind.

Die Aufgabe wird gelöst durch einen magnetisch-induktiven Durchflußaufnehmer, der umfaßt:
- ein in eine Rohrleitung druckdicht einfügbares, ein einlaßseitiges erstes Ende und ein auslaßseitiges zweites Ende aufweisendes Meßrohr, das
   --ein nicht-ferromagnetisches Trägerrohr als eine äußere Umhüllung des Meßrohrs
   -- einen in einem Lumen des Trägerrohrs untergebrachten, aus einem Isoliermaterial bestehenden rohrförmigen Liner zum Führen eines strömenden und vom Trägerrohr isolierten Fluids und
   --einen zur Stabilisierung des Liners in diesen eingebetteten offenporigen Stützkörper aufweist,
- eine am Meßrohr angeordnete Magnetkreisanordnung zum Erzeugen und Führen eines magnetischen Feldes, das im strömenden Fluid ein elektrisches Feld induziert, die
   --eine erste Spule,
   --eine zweite Spule,
   --einen an die Spulen magnetisch gekoppelten, eine endseitige, mindestens abschnittsweise gewölbte erste Stirnfläche aufweisenden ferromagnetischen ersten Spulenkern und
   --einen an die Spulen magnetisch gekoppelten, eine endseitige, mindestens abschnittsweise gewölbte zweite Stirnfläche aufweisenden ferromagnetischen zweiten Spulenkern umfaßt, und
- eine erste Elektrode und eine zweite Elektrode für das Abgreifen einer Spannung vom elektrischen Feld,
- wobei ein erster und ein zweiter Spulenkern-Sitz in den Stützkörper mit einer vorgebbaren Tiefe eingeformt sind
   -- wobei der erste Spulenkern mit einem von dessen Stirnfläche ausgehenden, endseitigen ersten Spulenkern- Abschnitt durch eine erste Mantel-Öffnung des Trägerrohrs hindurch in den ersten Spulenkern-Sitz des Stützkörpers so eingesetzt ist, daß die erste Stirnfläche an einer ersten Fläche des Spulenkern-Sitzes formschlüssig anliegt und
   --wobei der zweite Spulenkern mit einem von dessen Stirnfläche ausgehenden, endseitigen zweiten Spulenkern-Abschnitt durch eine zweite Mantel-Öffnung des Trägerrohrs hindurch in den zweiten Spulenkern-Sitz des Stützkörpers so eingesetzt ist, daß die zweite Stirnfläche an einer zweiten Fläche des Spulenkern-Sitzes formschlüssig anliegt.

Nach einer ersten Ausgestaltung des Durchflußaufnehmers der Erfindung umgreift der erste Spulenkern-Sitz den ersten Spulenkern-Abschnitt bzw. der zweite Spulenkern-Sitz den zweiten Spulenkern-Abschnitt wenigstens abschnittsweise formschlüssig.

Nach einer zweiten Ausgestaltung des Durchflußaufnehmers der Erfindung ist der erste Spulenkern-Abschnitt bzw. der zweite Spulenkern-Abschnitt polschuhartig ausgebildet. Nach einer dritten Ausgestaltung des Durchflußaufnehmers der Erfindung ist bei dem der Stützkörper ein gesintertes Formteil.

Nach einer vierten Ausgestaltung des Durchflußaufnehmers der Erfindung ist bei dem der Liner ein Gußteil oder ein Spritzgußteil, das den ersten und den zweiten Spulenkern wenigstens abschnittsweise formschlüssig umgreift.

Nach einer fünften Ausgestaltung des Durchflußaufnehmers der Erfindung ist die erste Spule auf dem ersten Spulenkern bzw. die zweite Spule auf dem zweiten Spulenkern angeordnet und wenigstens teilweise in das Isoliermaterial des Liners eingebettet.

Ein Grundgedanke der Erfindung besteht darin, Stützkörper und Liner nicht als vorgefertigte Komponenten in das Trägerrohr einzusetzen, sondern direkt im Trägerrohr, also in situ, herzustellen.

Ein weiterer Grundgedanke der Erfindung besteht darin, einerseits die Stirnflächen der Spulenkerne in weiten Grenzen beliebig, insb. als Polschuhe, auszubilden und somit das Magnetfeld im Fluid zu optimieren sowie andererseits den Stützkörper mit Spulenkernsitzen für das Einsetzen der Spulenkerne zu versehen, deren jeweilige Form mit der Form der Stirnflächen übereinstimmt.

Ein Vorteil der Erfindung ist es, daß der Stützkörper praktisch in jedes beliebig geformte Lumen des Trägerrohrs auf einfache Weise paßgenau und festsitzend eingebracht werden kann. Durch das zusätzliche Einbringen stirnseitiger Aufweitungen in das Trägerrohr und Ausfüllen mit Material für den Stützkörper können der Stützkörper und damit auch der Liner im Trägerrohr auf einfache Art und Weise zentriert und arretiert werden.

Ein weiterer Vorteil der Erfindung besteht darin, daß der Liner mit eingebettetem Stützkörper bereits in der endgültigen Form und Lage gefertigt wird und beiden somit praktisch jede erforderliche, insb. auch andere Bauteile umschließende, Raumform gegeben werden kann. Daher können bereits beim Sintern des Stützkörpers und beim Einfüllen und Erstarrenlassen des Isoliermaterials des Liners paßgenaue Spulenkernsitze für die Spulenkerne bzw. Durchführungen für die Elektroden in den Liner eingearbeitet werden, wobei die Durchführungen, falls erforderlich, innen vom Isoliermaterial des Liners überdeckt sind. Werden die Spulenkerne bzw. diese mit aufgesetzter Spule bereits vor dem Einfüllen des Isoliermaterials am Trägerrohr angeordnet, so sind diese ebenfalls während der Fertigung des Liners in das Isoliermaterial ganz oder teilweise einbettbar.

Durch ein entsprechendes Einbetten von ferromagnetischen Sintermaterialien in den Stützkörper, und zwar in den Bereichen, in denen im Betrieb des Durchflußaufnehmers die Einkopplung des Magnetfeldes in das Innere des Meßrohrs erfolgen soll, sind die Polschuhe direkt in den Liner integrierbar. Werden mehrere ferromagnetischen Sintermaterialien von unterschiedlicher Permeabilität verwendet, ist das im Betrieb des Durchflußaufnehmers erzeugte Magnetfeld in seiner räumlichen Ausprägung dementsprechend beeinflußbar und somit optimierbar.

Ferner besteht ein Vorteil der Erfindung darin, daß der Liner mit Stützkörper für beliebige Nennweiten praktisch ohne technischen Mehraufwand in beliebiger Stärke und Länge und damit mit jeder erforderlichen mechanischen Festigkeit und ausführbar ist. Der Stützkörper kann nämlich auch, falls ein einmaliges Sintern für die mechanische Festigkeit nicht ausreicht, mehrfach gesintert werden kann. Er kann aber auch aus mehreren nacheinander in-situ-hergestellten Sinter-Schichten aufgebaut werden.

Die Erfindung wird nun anhand der Figuren der Zeichnung näher erläutert, in der Ausführungsbeispiele dargestellt sind. Gleiche Teile sind mit gleichen Bezugszeichen versehen. Falls es die Übersichtlichkeit jedoch erfordert, sind Bezugszeichen in nachfolgenden Figuren weggelassen.
Fig. 1 zeigt perspektivisch im Längsschnitt einen magnetisch-induktiven Durchflußaufnehmer,
Fig. 2 zeigt im Querschnitt einen wesentlichen Teil eines magnetisch-induktiven Durchflußaufnehmers,
Fig. 3a zeigt im Längsschnitt ein Trägerrohr mit Mantel-Öffnungen für das Einsetzen von Spulenkernen und Elektroden,
Fig. 3b zeigt im Längsschnitt das Einfüllen von Sintermaterial in das Trägerrohr von Fig. 3a,
Fig. 3c zeigt im Längsschnitt das Trägerrohr von Fig. 3a mit einem Stützkörper und mit darin eingesinterten Spulenkernen,
Fig. 3d zeigt im Längsschnitt das Einfüllen von weiterem Sintermaterial in das Trägerrohr von Fig. 3c,
Fig. 3e zeigt im Längsschnitt das Einfüllen von Isoliermaterial in das Trägerrohr Fig. 3c und
Fig. 3f zeigt im Längsschnitt einen magnetisch-induktiven Durchflußaufnehmer.

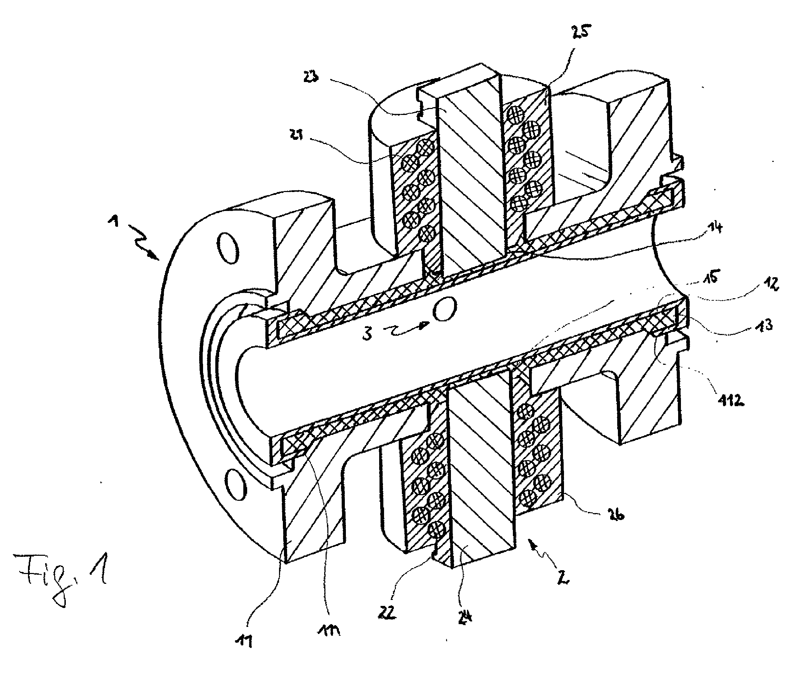

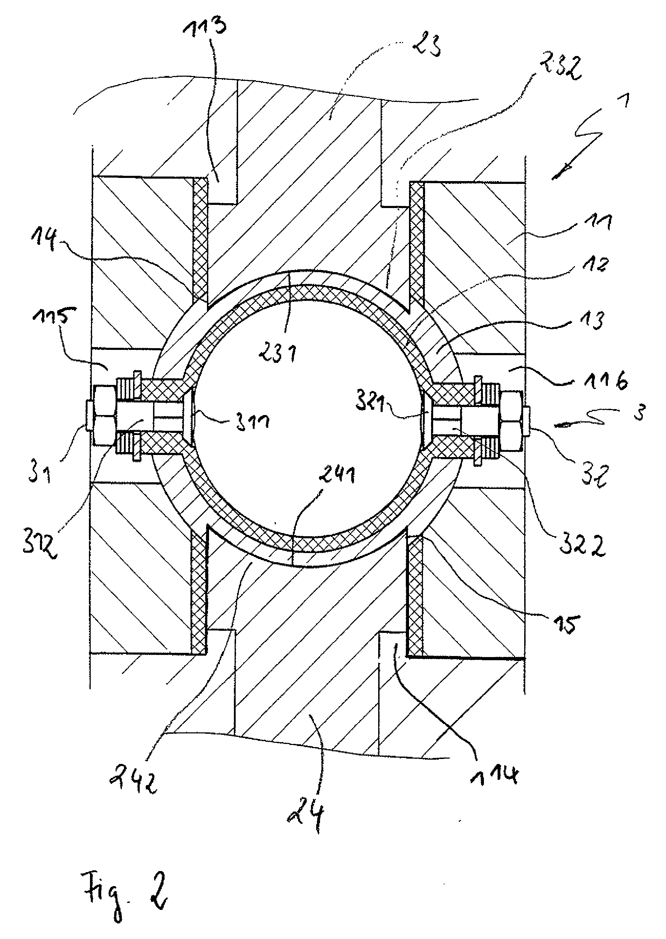

Fig. 1 zeigt perspektivisch im Längsschnitt einen magnetisch-induktiven Durchflußaufnehmer und Fig. 2 zeigt schematisch im Querschnitt einen wesentlichen Teil des Durchflußaufnehmers. Der Durchflußaufnehmer umfaßt ein gerades Meßrohr 1 von vorgebbarer Form und Größe zum Führen eines strömenden Fluids, eine am Meßrohr 1 angeordnete Magnetkreisanordnung 2 zum Führen eines Magnetfeldes durch das Fluid sowie eine ebenfalls am Meßrohr 1 angeordnete Elektrodenanordnung 3 zum Messen einer im Fluid induzierten Spannung.

Zum druckdichten Einfügen in eine von einem Fluid durchströmbare Rohrleitung weist das Meßrohr 1 ein einlaßseitiges erstes Ende und ein auslaßseitiges zweites Ende auf.

Das Meßrohr 1 umfaßt ein Trägerrohr 11 von vorgebbarem Lumen und einen rohrförmigen, aus einem Isoliermaterial bestehenden Liner 12 von vorgebbarer Weite sowie einen in den Liner 12 eingebetteten, offenporiger Stützkörper 13 von vorgebbarer Poren-Größe und Dicke. Der ebenfalls rohrförmig ausgeführte Stützkörper 13 dient der mechanischen Stabilisierung des Liners 12, insb. bei Temperaturen des strömenden Fluids von -40°C bis 200° in einem Druckbereich von 0 bar bis 40 bar.

Das Trägerrohr 11 umschließt den Liner 12 mit eingebettetem Stützkörper 13 koaxial und dient somit als eine äußere formgebende sowie formstabilisierende Umhüllung Meßrohrs 1.

Nach den Fig. 1 und 2 ist das Meßrohr 1 so ausgeführt, daß das Trägerrohr 11 bzw. der Stützkörper 13 innen vollständig vom Liner 12 bedeckt ist und somit allein der Liner 12 vom durch das Meßrohr 1 hindurchströmende Fluid benetzt wird, vgl. hierzu auch die US-A 32 13 685.

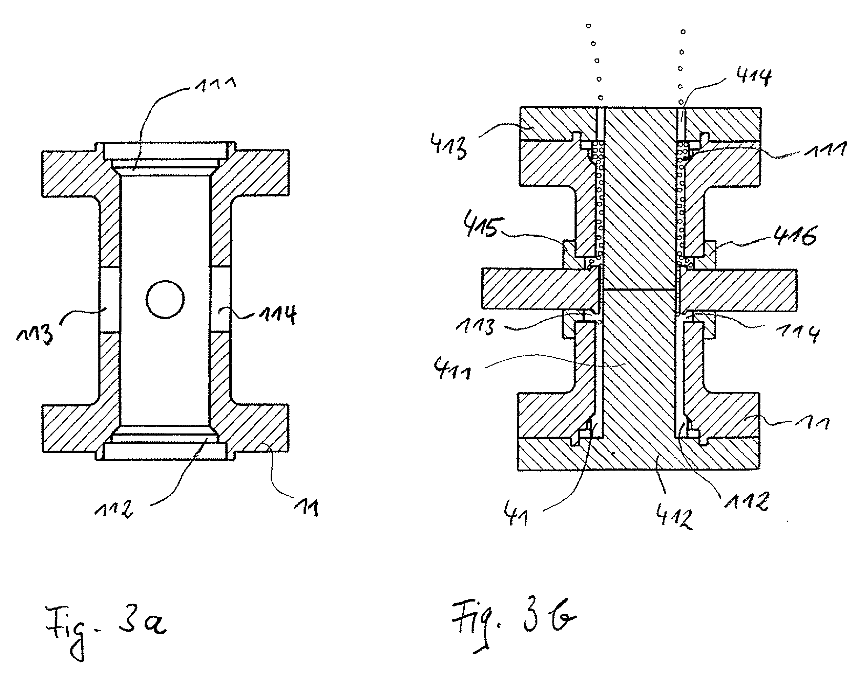

Die Fig. 3a bis 3f zeigen im Längsschnitt einen jeweils momentanen Zustand des Durchflußaufnehmers während verschiedener Verfahrensschritte bei der Herstellung.

In Fig. 3a ist das Trägerrohr 11 zu Beginn des Verfahrens der Erfindung gezeigt. Es wird bevorzugt kostengünstig als Gußteil hergestellt, das nachträglich z.B. durch spanende Verfahren wie Fräsen, Drehen und/oder Bohren fertigbearbeitet wird; es kann selbstverständlich auch, ausschließlich durch spanende Verfahren oder andere dem Fachmann bekannte Herstellverfahren für Rohre gefertigt werden. Als Materialien für das Trägerrohr 11 kommen alle in Durchflußaufnehmern üblicherweise verwendeten Edelstähle, insb. legierte und hochlegierte Edelstähle, zum Einsatz; es können aber auch andere nichtferromagnetische Legierungen, wie z.B. Kupferlegierungen, Titanlegierungen oder Nickellegierungen, aber auch geeignete Kunststoffe, wie z.B. glasfaserverstärkte Kunststoffe, verwendet werden.

Der Stützkörper 13 ist nach Fig. 1 ein rohrförmiger Körper, der durch In-situ-Sintern von körnigem Sinterausgangsmaterial vorgebbarer Partikel-Größe, also durch Sintern in der endgültigen Einbauform und Einbaulage, im Trägerrohr 11 paßförmig und festsitzend gefertigt wird.

Gemäß Fig. 3b wird zum Sintern des Stützkörpers 13 ein erster Sinter-Dorn 411 in das Lumen des Trägerrohr 11 eingebracht und dort temporär so fixiert, daß ein zum Trägerrohr 11 koaxial verlaufender erster Sinterraum 41 von vorgebbarem ersten Sinter-Volumen gebildet wird. Der Sinter-Dorn 411 besteht aus zwei Teildornen, die so ausgeführt sind, daß sie nach dem Einbringen in das Trägerrohr 11 mit ihren jeweiligen Stirnflächen aneinanderstoßen; der Sinter-Dorn 411 kann selbstverständlich auch in geeigneter Weise einteilig ausgeführt sein.

Er ist bevorzugt rotationssymmetrisch bezüglich einer Längsachse und hat einen kleinsten Durchmesser, der größer als die vorgebbare Weite des Liners 12 ist, und einen größten Durchmesser, der kleiner als ein größter Innen-Durchmesser des Trägerrohrs 11 ist, ausgebildet; der Sinter-Dorn 411 kann selbstverständlich auch, wenn erforderlich, nicht-rotationssymmetrisch, z.B. elliptisch oder prismatisch, ausgeführt sein.

Falls der Stützkörper 13, wie z.B. bei kleinen Nennweiten von 10 mm bis 20 mm üblich, jeweils vom einlaßseitigen und auslaßseitigen Ende nach innen zum Meßrohr konisch oder trichterförmig verjüngt ausgebildet ist, besteht der Sinter-Dorn 411 aus zwei Teildornen, die in entsprechender Weise konisch oder trichterförmig ausgeführt sind und die nach dem Einbringen in das Trägerrohr 11 jeweils mit ihren kleineren Stirnflächen aneinanderstoßen. Nach dem Einbringen des Sinter-Dorns 411 wird das Trägerrohr 11 so verschlossen, daß nur Einfüll-Öffnungen für das Sinterausgangsmaterial verbleiben. Diese sind dabei bevorzugt durch ein einziges offengelassenes Ende des Trägerrohrs 11 gebildet. Das Fixieren des Sinter-Dorns 411 und das Verschließen des Sinterraums 41 erfolgt üblicherweise mittels eines endseitigen ersten Flansches 412; wird der Sinter-Dorn 411, wie in Fig. 3b dargestellt, auch am zweiten Ende mittels eines endseitigen zweiten Flansches 413 fixiert, so weist bevorzugt einer der beiden Flansche 412, 413 die entsprechenden Einfüll-Öffnungen 414 auf. Es ist selbstverständlich und klar, daß Partikel- Größe, Sinter-Volumen und Einfüll-Öffnungen so zu bemessen sind, daß das Sinterausgangsmaterial in den Sinterraum 41 einfüllbar ist.

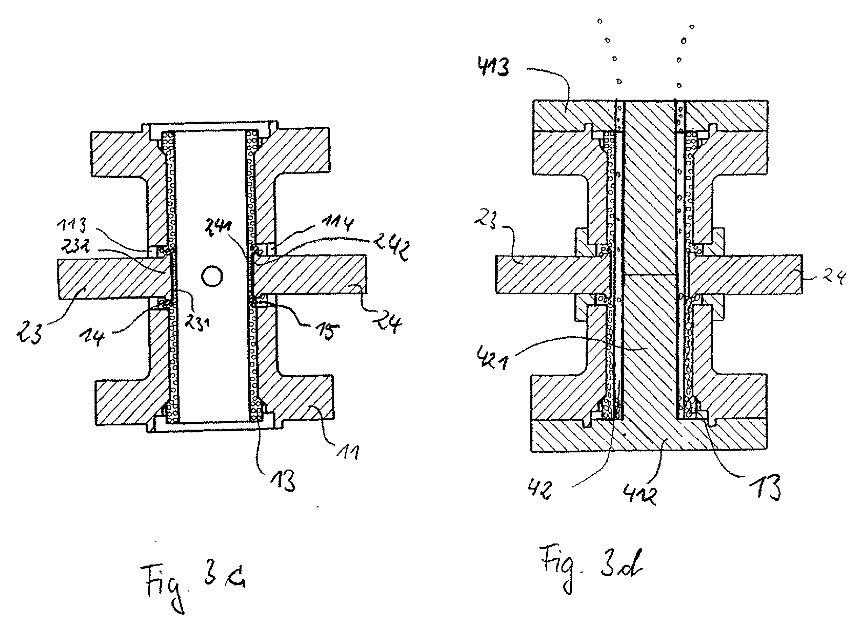

Nach dem Verschließen des Sinterraums 41 wird dieser, wie in Fig. 3b schematisch dargestellt, mit dem Sinterausgangsmaterial gefüllt. Danach wird das Sinterausgangsmaterial im Sinterraum 41 gesintert, wodurch der Stützkörper 13 im Lumen des Trägerrohr 11 paßförmig gebildet wird, vgl. Fig. 3c. Gegebenenfalls wird das Trägerrohr 11 vor dem Sintern vollständig dicht verschlossen.

Als Sinterausgangsmaterial dienen Metallpartikel, insb. aus Sinterbronze; es können aber auch andere Materialien, wie z.B. Sinterglaspartikel, Sinterkeramikpartikel oder sinterfähige, insb. Oberflächen-metallisierte, Kunststoffpartikel, verwendet werden.

Für den Fall, daß im Betrieb des Durchflußaufnehmers, z.B. aufgrund unterschiedlicher thermischer Ausdehnung von Stützkörper 13 und Trägerrohr 11, mechanische Spannungen zu erwarten sind, die, insb. innerhalb des Stützkörpers 13, einen maximal zulässigen Betrag überschreiten, sind Maßnahmen zu deren Reduzierung erforderlich.

Nach einer Ausgestaltung der Erfindung besteht der Stützkörper 13 dazu aus wenigstens zwei rohrförmigen Teil Stützkörpern mit voneinander verschiedenen thermischen Ausdehnungskoeffizienten, die koaxial zueinander angeordnet und kraftschlüssig miteinander verbunden sind.

Zur Fertigung des aus mindestens zwei Teil-Stützkörpern bestehenden Stützkörpers 13 wird nach einer Ausgestaltung des Verfahrens der Erfindung wird gemäß Fig. 3d der für das Sintern eingesetzte erste Sinter-Dorn 411 durch einen zweiten Sinter-Dorn 421 ersetzt, der temporär so im Lumen des Trägerrohrs 11 fixiert wird, daß zwischen dem Sinter- Dorn 421 und dem bereites gesinterten Stützkörper 13 ein mit der Längsachse des Lumens koaxial fluchtender zweiter Sinterraum 42 von vorgebbarem zweiten Sinter-Volumen gebildet wird; der Sinter-Dorn 421 kann dabei, falls erforderlich, wie der Sinter-Dorn 411 zweiteilig ausgeführt sein.

Der Sinter-Dorn 421 hat einen kleinsten Durchmesser, der größer als die kleinste Weite des Liners 12 ist, und einen größten Durchmesser, der kleiner als der größte Durchmesser des Sinter-Dorns 411 ist. Nach dem Einbringen des Sinter-Dorns 421 wird das Trägerrohr 11, wie beim vorausgegangen Sintern sinterdicht verschlossen, z.B. wiederum mittels der Flansche 412, 413.

Danach wird der Sinterraums 42 mit einem zweiten Sinterausgangsmaterial, insb. vollständig, gefüllt und das Trägerrohr 11 daraufhin ggf. vollständig dicht verschlossen. Im Anschluß daran wird das zweite Sinterausgangsmaterial im Sinterraum 42 gesintert, und somit ein verstärkter, praktisch aus zwei koaxialen Teil- Stützkörpern bestehender Stützkörper 13 gefertigt.

Diese Ausführung des Stützkörpers 13 aus zwei oder mehreren Teil-Stützkörpern kann z.B. ebenso zur Optimierung von Temperaturverteilungen im Meßrohr 1 oder zur Optimierung der elektromagnetischen Eigenschaften des Stützkörpers 13 dienen.

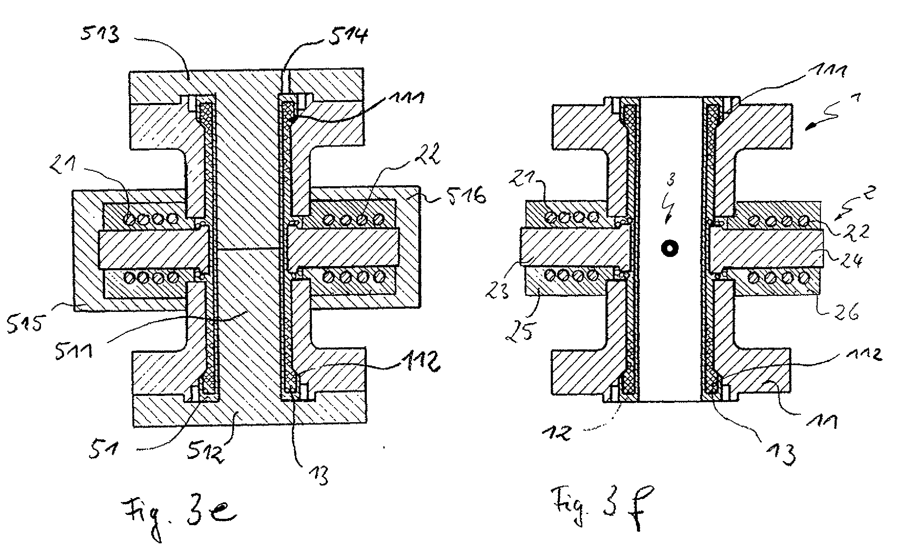

Nach den Fig. 1 und 2 ist das Meßrohr 1 innen mit einem Liner 12 ausgekleidet, und zwar so, daß Stützkörper 13 und Trägerrohr 11 im Betrieb des Durchflußaufnehmers vollständig vom hindurchströmenden Fluid isoliert sind. Der Liner 12 wird gemäß Fig. 3e nach der Fertigung des Stützkörpers 13 ebenfalls direkt im Trägerrohr 11 durch Einfüllen und Erstarrenlassen von verflüssigtem Isoliermaterial hergestellt. Dies erfolgt bevorzugt in einem üblichen Transfer-, Kompression- oder Injection- Molding-Verfahren.

Als Isoliermaterial können hierzu alle diejenigen bei magnetisch-induktiven Durchflußaufnehmern üblicherweise für den Liner 12 eingesetzten Kunststoffe dienen, die zum Einbringen in das Trägerrohr 11 mindestens einmal verflüssigt werden können, wie z.B. Thermoplaste, insb. fluorhaltige Thermoplaste oder Polyolefine, oder Duroplaste, insb. Gießharze oder Polyurethane.

Zur Herstellung des Liners 12 wird der beim das Sintern verwendete Sinter-Dorn 411 bzw. 421 durch einen Gieß-Dorn 511 ersetzt, der temporär so im Lumen des Trägerrohr 11 fixiert wird, daß zwischen dem Gieß-Dorn 511 und dem Stützkörper 13 ein mit der Längsachse des Lumens koaxial fluchtender Gießraum 51 von vorgebbarem Gieß-Volumen gebildet wird. Der Gieß-Dorn 511 ist bevorzugt zylindrisch mit einem Durchmesser, der, unter Berücksichtigung eines Gieß-Volumenschwundes nach dem Erstarrenlassen, höchstens gleich der vorgegebenen Weite des Liners 12 ist, ausgebildet.

Nach dem Einbringen des ersten Gieß-Dorns 511 wird das Trägerrohr 11 gießdicht so verschlossen, daß nur Eingieß- Öffnungen für das verflüssigte Isoliermaterial verbleiben. Das Fixieren des Gieß-Dorns 511 und das Verschließen des Trägerrohr 11 erfolgt üblicherweise mittels eines dritten und vierten endseitigen Flansches 512 bzw. 513, von denen z.B. einer eine entsprechende Eingieß-Öffnung 514 aufweist.

Nach dem Verschließen des Trägerrohr 11 wird in den Gießraum 51 verflüssigtes Isoliermaterial eingefüllt. Dieses dringt in die Poren des Stützkörpers 13 ein und füllt diesen aus.

Das Einfüllen erfolgt bevorzugt solange bis der Gießraum 51 und der Stützkörper 13 vollständig mit dem Isoliermaterial ausgefüllt sind, mindestens aber solange, bis der Gießraum 51 vollständig und der Stützkörper 13 wenigstens teilweise mit dem Isoliermaterial ausgefüllt sind. Dadurch bedeckt das Isoliermaterial nach dem Erstarren den Stützkörper 13 mindestens an der beim Betrieb des Durchflußaufnehmers dem Fluid zugewandten, inneren Seite vollständig.

Nach dem Einfüllen wird das Isoliermaterial erstarrengelassen und somit der Liner 12 mit eingebettetem Stützkörper 13 im Lumen des Trägerrohrs 11 paßförmig derart gebildet, daß dieser den Stützkörper 13 und das Trägerrohr 11 vom Fluid isoliert.

Das Trägerrohr 11 weist bevorzugt eine in das einlaßseitige erste Ende eingebrachte stirnseitig erste Aufweitung 111 und eine in das auslaßseitige zweite Ende eingebrachte zweite Aufweitung 112 auf. Die beiden Aufweitungen 111, 112 sind nach Fig. 1 bzw. 3a abschnittsweise einwärts sich konisch verjüngend ausgebildet; sie können aber auch von gerader zylindrischer Form sein.

Beide Aufweitungen 111, 112 sind beim Sintern vom Sinterausgangsmaterial wenigstens teilweise ausgefüllt, und zwar so, daß der gesinterte Stützkörper 13 mit dem Trägerrohr 11 verspannt und somit zusätzlich fixiert ist, vgl. Fig. 3c.

Bevorzugt sind die Aufweitungen 111, 112 vom Stützkörper 13 so ausgefüllt, daß der Liner 12 den Stützkörper 13 im Bereich der Aufweitungen 111, 112 teilweise umgreift und damit endseitig praktisch vollständig überdeckt, vgl. hierzu die Fig. 3e und 3f.

Zur optimalen Anpassung der Poren-Größe an das Isoliermaterial des Liners 12 sowie zur Reduzierung von Volumenschwund des gesinterten Stützkörpers 13 gegenüber dem ersten bzw. zweiten Sinter-Volumen sind nach einer weiteren Ausgestaltung des Verfahrens der Erfindung auch entsprechende sinterfähigen Gemische von verschiedenen Sinterausgangsmaterialien und/oder von unterschiedlichen Partikel-Größen einsetzbar.

Zum Erzeugen und zum Führen eines das Fluid abschnittsweise durchsetzenden Magnetfelds weist der Durchflußaufnehmer nach den Fig. 1 und 2 eine Magnetkreisanordnung 2 auf. Diese umfaßt eine erste und eine zweite zylindrische Spule 21, 22, von denen jede einen ersten bzw. einen zweiten ferromagnetischen Spulenkern 23, 24 mit jeweils einer freien endseitigen ersten bzw. zweiten Stirnfläche 232, 242 von vorgebbarer Form umgibt.

Zur Unterdrückung von Wirbelströmen sind die Spulenkerne bevorzugt als ein einziges Blechformteil oder als Paket von mehreren, elektrisch voneinander isoliert geschichteten Blechformteilen ausgeführt, vgl. die JP-Y 2 - 28 406 oder die US-A 46 41 537.

Außerhalb des Meßrohrs 1 sind die Spulenkerne 23, 24 an deren der jeweiligen Stirnfläche 232 bzw. 242 gegenüberliegenden Enden mit einem nicht dargestellten, ebenfalls ferromagnetischen, Rückschluß von vorgebbarer Länge und Form verbunden. Üblicherweise ist der Rückschluß beiderseits von außen um das Meßrohr 1 gelegt, vgl. hierzu die US-A 46 41 537.

Nach einer anderen Ausgestaltung der Erfindung bestehen die Spulenkerne 23, 24 anstelle der Blechformteile wenigstens endseitig aus gesintertem ferromagnetischem Material, insb. aus oberflächen-metallisierten Kunststoffpartikeln.

Die Spulen 21, 22 sind bevorzugt jeweils auf einen rohrförmigen, den jeweiligen Spulenkern 23, 24 koaxial umschließenden ersten bzw. zweiten Spulenkörper 25, 26 gewickelt; die Spulen 21, 22 können aber auch selbsttragend oder in den Spulenkörper 25, 26 wenigstens teilweise eingebettet sein. Neben Magnetkreisanordnungen mit zwei Spulen sind auch solche mit drei oder mehr Spulen üblich, vgl. hierzu die JP-A 3 - 218 414.

Im Meßbetrieb sind die Spulen 21, 22 mit einer Erreger- Elektronik zum Erzeugen elektrischer Ströme vorgebbarer Stromstärke verbunden und von letzteren durchflossen. Dadurch entstehen zwei Teilmagnetfelder, die die jeweiligen Stirnflächen 232, 242 der zugehörigen Spulenkerne 23, 24 im wesentlichen flächennormal schneiden und sich dabei zu einem resultierenden Magnetfeld gerichtet überlagern. Dieses durchsetzt das innerhalb eines Meßvolumen strömende Fluid abschnittsweise senkrecht zu dessen Strömungsrichtung. Als Erreger-Elektronik können die im Stand der Technik beschriebenen Schaltungsanordnungen verwendet werden.

Zur Aufnahme der Spulenkerne 23, 24 umfaßt das Meßrohr 1 bevorzugt einen ersten Spulenkernsitz 14 für das stirnseitige Einsetzen des Spulenkerns 23 und einen zweiten Spulenkernsitz 15 für das stirnseitige Einsetzen des Spulenkerns 24, vgl. die Fig. 1 und 2.

Die Spulenkernsitz 14, 15 weisen bevorzugt eine die jeweilige Stirnflächen 231 bzw. 241 der Spulenkerne 23, 24 formschlüssig berührende erste bzw. zweite Fläche auf, an der der jeweils zugehörige Spulenkern 23, 24 flächig anliegt.

Für das Einsetzen der Spulenkerne 23, 24 in die Spulenkernsitze 14, 15 ist das Trägerrohr 11 mit einer seitlichen ersten Mantel-Öffnung 113 und mit einer seitlichen zweiten Mantel-Öffnung 114 versehen. Beide Mantel-Öffnungen 113, 114 haben bevorzugt die gleiche Form und sind entlang eines Umfangkreises des Trägerrohrs 11 voneinander beabstandet angeordnet, insb. so, daß sie sich diametral gegenüberliegen.

Die Spulenkerne 23, 24 sind so durch die jeweilige Mantelöffnung 113 bzw. 114 hindurch in das Meßrohr 1 eingesetzt und so zueinander ausgerichtet, daß sich ihre beiden Stirnflächen 231, 241 entlang des Umfangkreises voneinander beabstandet, insb. diametral beabstandet und spiegelbildlich, gegenüberliegen. Die Mantel-Öffnungen 113, 114 bzw. die Stirnflächen 231, 241 können aber auch entlang einer Sehne des Umfangkreises des Meßrohrs 1 voneinander beabstandet und/oder nicht-spiegelbildlich am Meßrohr 1 angeordnet sein, vgl. JP-A 3 - 218 414.

Für das Einsetzen der Spulenkerne 23, 24 sind die Mantel-Öffnungen 113, 114 selbstverständlich so zu dimensionieren, daß die Spulenkerne 23, 24 ohne weiteres hindurchpassen. Die Mantel-Öffnungen 113, 114 werden vor dem Einsetzen des ersten Sinter-Dorns 411 in das Trägerrohr 11 eingebracht und beim Einfüllen und Sintern des Sinterausgangsmaterials für den Stützkörper 13 mittels eines ersten bzw. mittels eines zweiten Sinterverschlusses 415, 416 sinterdicht verschlossen, vgl. Fig. 3b.

Die beiden Sinterverschlüsse 415, 416 sind bevorzugt so ausgeführt, daß der Stützkörper 13 gemäß Fig. 3c die beiden Mantel-Öffnungen 113, 114 wenigstens teilweise ausfüllt. Das Ausfüllen der Mantel-Öffnungen 113, 114 erfolgt z.B. so, daß der Stützkörper 13 seitlich an den Mantel-Öffnungen 113, 114 anliegt und so zusätzlich arretiert ist.

Falls erforderlich sind die beiden Mantel-Öffnungen 113,114 beim Einfüllen und Erstarrenlassen des verflüssigten Isoliermaterials für den Liner 12, wie in Fig. 3e dargestellt, mittels eines ersten bzw. mittels eines zweiten Gießverschlusses 515, 516 gießdicht zu verschließen.

Die räumliche Ausbildung des Magnetfeldes im Meßvolumen und damit auch die Genauigkeit des Durchflußaufnehmers werden durch den gegenseitigen Abstand der Stirnflächen der Spulenkerne mitbestimmt. Je näher die Stirnflächen zueinander angeordnet sind, desto kleiner ist das Meßvolumen und desto stärker ist das elektrische Feld bei gleicher Erregung, insb. im Bereich des Fluids mit hoher Strömungsgeschwindigkeit, ausgebildet. In entsprechender Weise verringert sich der Einfluß von Störungen im Fluid, die z.B. auf Änderungen im Strömungsverhalten oder auf Temperaturschwankungen beruhen, auf ein mit dem Durchflußaufnehmer gewonnenes Meßsignal. Gleichzeitig wird die Empfindlichkeit des Durchflußaufnehmers gegenüber Änderungen des zu messenden Volumendurchflusses größer. Sie ist optimal, wenn die beiden Stirnflächen so nah wie mölich einander gegenüberliegen.

Zur Steigerung der Empfindlichkeit des Durchflußaufnehmers sind gemäß den Fig. 1 und 2 der erste und der zweite Spulenkernsitz 14, 15 in den Stützkörper 13 mit einer vorgebaren Tiefe so eingeformt, daß sich deren Flächen mit einem vorgebbarem Abstand gegenüberliegen. Dadurch sind die Spulenkerne 23, 24 mit einem endseitigen, an deren Stirnflächen 231, 241 angrenzenden ersten bzw. zweiten Spulenkern-Abschnitt 232 bzw. 242 in den Spulenkernsitz 14 bzw. 15 einsetzbar und somit deren Stirnflächen 231, 241 mit einem vorgebbaren, von der gewählten Dicke des Stützkörpers 13 praktisch unabhängigen, gegenseitigen Abstand am Meßrohr 1 positionierbar.

Die räumliche Ausbildung des Magnetfeldes im Fluid und damit die Empfindlichkeit des Durchflußaufnehmers ist außerdem durch eine geeignete, insb. durch ein gekrümmte oder gewölbte, Formung der Stirnflächen optimierbar. Für den Fall, daß zum Messen ein möglichst kompaktes Meßvolumen bevorzugt wird, können die Stirnflächen 231, 241 zum Lumen des Meßrohrs 1 hin jeweils konvex gekrümmt oder gewölbt sein, und zwar mit einem Krümmungsradius, der kleiner als eine halbe Weite des Liners 12 ist. Anderenfalls der Krümmungsradius entsprechend größer auszulegen.

Zur weiteren Steigerung der Empfindlichkeit des Durchflußaufnehmers sind daher die beiden Stirnflächen 231, 241 und der jeweils daran angrenzende endseitige Spulenkern-Abschnitt 232, 242 gemäß Fig. 2 polschuhartig mit vorgebbarer Form und Flächeninhalt ausgebildet. Die Stirnflächen 231, 241 sind dann bevorzugt von gewölbter oder gekrümmter Form und weisen eine gleichmäßige und zum Lumen des Meßrohrs 1 hin konvex verlaufende Krümmung auf.

Falls formschlüssige Spulenkernsitze 14, 15 in den Stützkörper 13 eingelassen sind, weisen die beiden die Sinterverschlüsse 415, 416 Flächen auf, die das Sinterausgangsmaterial berühren und die entsprechend der Form der einzusetzenden Spulenkerne 232, 242 ausgebildet sind. Dies gilt dann in analoger Weise auch für die Gießverschlüsse 515, 516 und deren das verflüssigte Isoliermaterial berührenden Flächen.

Durch das Ausformen der beiden Sinterverschlüsse 415, 416 und/oder der beiden Gießverschlüsse 515, 516 entsprechend der Form der einzusetzenden Spulenkerne 232, 242 ist in einfacher Weise ein paßförmiger Spulenkernsitz 14 bzw. 15 in den Stützkörper 13 einformbar.

Dieses Ausformen der Sinterverschlüsse 415, 416 und der Gießverschlüsse 515, 516 ist besonders vorteilhaft dadurch realisierbar, daß der Spulenkern 23 bzw. 24, wie in Fig. 3b dargestellt, vor dem Sintern in den Sinterverschluß 415 bzw. 416 sowie vor dem Einfüllen des verflüssigten Isoliermaterials in den Gießverschluß 515 bzw. 516 temporär eingesetzt wird, vgl Fig. 3e. Dadurch sind die Spulenkerne 23, 24 nach der Fertigstellung des Meßrohrs 1 in den Stützkörper 13 und den Liner 12 endseits, insb. form- und kraftschlüssig, eingelassen.

Somit sind beliebig geformte Spulenkerne, insb. auch mit gewölbten freien endseitigen Stirnflächen, ohne weiteres und praktisch beliebig tief in den Stützkörper 13 einsetzbar. Da die Spulenkerne 23, 24 bereits zum Sintern im Trägerrohr 11 positioniert werden, können diese auch vom Lumen des Trägerrohrs 11 aus in letzteres eingesetzt werden.

Falls der Spulenkern 23 bzw. 24 in den entsprechenden Gießverschluß 515 bzw. 516 temporär eingesetzt wird, werden die Spule 21 bzw. 22 bevorzugt vor dem Einfüllen des Isoliermaterials auf dem Spulenkern 23 bzw. 24 angeordnet. Die Gießverschlüsse 515, 516 sind dabei nach Fig. 3e topfartig so ausgeformt, daß das Isoliermaterial durch den Stützkörper 13 und die Mantel-Öffnungen 113, 114 hindurch aus dem Trägerrohr 11 austritt und daß nach dem Erstarrenlassen des Isoliermaterials die Spule 21 bzw. 22 wenigstens teilweise darin eingebettet und somit praktisch die Spulenkörper 25 bzw. 26 gebildet sind, vgl. 3f. Falls die Poren des Stützkörpers 13 ein hinreichend schnelles Befüllen der Mantel-Öffnungen 113, 114 nicht ermöglichen, sind, bevorzugt beim Sintern, entsprechende Durchlaßkanäle im Stützkörper 13 vorzusehen.

Für den Fall eines nachträglichen Einsetzens der Spulenkerne 23, 24 sind die Spulenkernsitze 14, 15 in ihrer Form und Größe so auszubilden, daß der zugehörige Spulenkern 23 bzw. 24 ohne weiteres eingepaßt werden kann.

Zur weiteren Stabilisierung des Liners 12 können in die Mantel-Öffnungen 113, 114 bei deren Fertigung zusätzliche Stege und Absätze eingeformt, an denen sich der Stützkörper 13 bzw. der Liner 12 abstützt.

Zum Abgreifen einer im Fluid induzierten Spannung weist der Durchflußaufnehmer nach den Fig. 1 und 2 eine am Meßrohr 1 angebrachte Sensoranordnung 3 auf, die eine erste und eine zweite Elektrode 31, 32 umfaßt. Die Elektroden sind bevorzugt stabförmig mit einem ersten bzw. einem zweiten Elektroden-Kopf 311, 321 für das Abgreifen der eingangs erwähnten induzierte Spannung und mit einem ersten bzw. einem zweiten Elektroden-Schaft 312, 322, der dem Anschließen der Sensoranordnung an eine Auswerte-Elektronik dient, ausgebildet.

Die Elektroden 31, 32 können, wie in Fig. 2 dargestellt, galvanische oder aber auch kapazitive Elektroden sein.

Das Trägerrohr 11 ist daher ferner mit einer seitlichen dritten bzw. vierten Mantel-Öffnung 115, 116 für das Einsetzen der Elektrode 31 bzw. 32 versehen.

Die Mantel-Öffnungen 115, 116 haben eine Weite, die größer als ein größter Durchmesser des jeweiligen Elektroden- Schaftes 312 bzw. 322 ist. Sie haben bevorzugt die gleiche Form und liegen bevorzugt einander diametral gegenüber, wobei ein die Mantel-Öffnungen 115, 116 verbindender Durchmesser des Trägerrohrs 11 zu einem die Mantel-Öffnungen 113, 114 verbindenden Durchmesser des Trägerrohrs 11 senkrecht verläuft.

Selbstverständlich können die Elektroden 31, 32, falls erforderlich, insb. bei mehr als zwei Elektroden, am Meßrohr 1 so voneinander beabstandet angeordnet werden, daß sie sich nicht diametral gegenüberliegen. Dies ist z.B. dann der Fall, wenn zusätzliche Elektroden für Referenzpotentiale oder bei waagerechter Einbaulage des Meßrohrs 1 Elektroden zur Überwachung eines Mindestfüllstandes des Fluids im Meßrohr 1 vorgesehen sind.

Für das spätere Einsetzen der stabförmigen Elektroden 31, 32 in das Meßrohr 1 werden die Mantel-Öffnungen 115, 116 mittels eines nicht dargestellten dritten bzw. mittels eines ebenfalls nicht dargestellten vierten Sinter-Dorns nach dem Einsetzen des ersten Sinter-Dorns 411 sinterdicht verschlossen. Das Verschließen Mantel-Öffnungen 115, 116 erfolgt bevorzugt so, daß der dritte und der vierte Dorn bis zum Sinter-Dorn 411 reichen, wodurch sich nach dem Sintern des Stützkörpers 13 die beiden Mantel-Öffnungen 115, 116 in diesem durchgängig fortsetzen, vgl. Fig. 2. Dabei weisen der dritte und vierte Dorn jeweils einen kleinsten Durchmesser auf, der mindestens etwas größer als ein größter Durchmesser des ersten bzw. zweiten Elektroden- Schaftes ist.

Bei der Verwendung von galvanischen Elektroden gemäß Fig. 2 werden die Mantel-Öffnungen 115, 116 und deren Fortsatz im Stützkörper für das Einfüllen des Isoliermaterials mit einem dritten bzw. einem vierten Gießverschluß gießdicht bevorzugt so verschlossen, daß nach dem Erstarren des Isoliermaterials das Meßrohr 1, ausgehend von der jeweiligen MantelÖffnung 115 bzw. 116, eine erste bzw. eine zweite Elektroden-Durchführung aufweist.

Das gießdichte Verschließen der Mantel-Öffnungen 115, 116 erfolgt bevorzugt so, daß die Elektroden-Durchführungen an deren Innenseite vollständig und mit einer vorgebbaren Mindestdicke vom Isoliermaterial bedeckt sind und somit bereits während der Fertigung des Liners 12 elektrisch isolierte Elektroden-Durchführungen für die nachträglich einzusetzenden Elektroden geschaffen werden. Der dritte bzw. des vierte Gießverschlußes ist dabei, unter Berücksichtigung des Gieß-Volumenschwundes, in geeigneter Weise so auszubilden, daß nach dem Erstarrenlassen deslsoliermaterials bereits paßförmige, den Elektroden- Schäften 312, 322 entsprechende Elektroden-Durchführungen in das Meßrohr 1 eingeformt sind.

Bei der Verwendung von kapazitiven Elektroden sind die Gießverschlüsse in besonders vorteilhafter Weise dadurch ausführbar, daß in diese die Elektroden 31, 32 so eingesetzt werden, das sie nach dem Einfüllen und Erstarrenlassen des Isoliermaterials bereits in ihrer entgültigen Einbaulage im Meßrohr 1 angeordnet und dabei vom Isoliermaterial des Liners 12 gegen über dem Stützkörper 13 und dem Trägerrohr 11 sowie im Betrieb gegenüber dem Fluid vollständig elektrisch isoliert sind.

Die Elektroden-Schäfte 312, 322 sind innerhalb der Elektroden-Durchführung bevorzugt wenigstens abschnittsweise prismatisch, insb. quaderförmig, ausgeführt, wodurch die Elektroden 31, 32 ohne ein Gegenwerkzeug im Lumen des Meßrohrs 1 leicht montierbar sind.

Bei mehr als zwei Elektroden erfolgt das sinterdichte bzw. gießdichte Verschließen der entsprechenden Elektroden- Öffnungen vor dem Sintern des Stützkörpers bzw. vor dem Einfüllen des Isoliermaterials in analoger Weise mit entsprechenden Gieß- bzw. Sinterverschlüssen.

Da es sich sowohl beim In-situ-Sintern als auch beim Einbringen des Isoliermaterials in das Trägerrohr 11 bzw. den Liner 12 um thermische Verfahren zur Erzielung von Rekristallisationsprozessen im Gefüge immer nur genau einer der genannten Komponenten des Meßrohrs 1, nämlich Trägerrohr 11, Stützkörper 13 oder Liner 12, handelt, muß aufgrund der Bearbeitungsreihenfolge die Entfestigungstemperatur des Trägerrohrs 11 größer als die des Stützkörpers 13 und muß letztere wiederum größer als die Schmelztemperatur des Liners 12 sein.

## Patentansprüche

1. Magnetisch-induktiver Durchflußaufnehmer, der umfaßt:
- ein in eine Rohrleitung druckdicht einfügbares, ein einlaßseitiges erstes Ende und ein auslaßseitiges zweites Ende aufweisendes Meßrohr (1), das
-- ein nicht-ferromagnetisches Trägerrohr (11) als eine äußere Umhüllung des Meßrohrs (1),
-- einen in einem Lumen des Trägerrohrs (11) untergebrachten, aus einem Isoliermaterial bestehenden rohrförmigen Liner (12) zum Führen eines strömenden und vom Trägerrohr (11) isolierten Fluids und
-- einen zur Stabilisierung des Liners (12) in diesen eingebetteten offenporigen Stützkörper (13) aufweist,
- eine am Meßrohr (1) angeordnete Magnetkreisanordnung (2) zum Erzeugen und Führen eines magnetischen Feldes, das im strömenden Fluid ein elektrisches Feld induziert, die
-- eine erste Spule (21),
-- eine zweite Spule (22),
-- einen an die Spulen (21, 22) magnetisch gekoppelten, eine endseitige, mindestens abschnittsweise gewölbte erste Stirnfläche (231) aufweisenden ferromagnetischen ersten Spulenkern (23) und
-- einen an die Spulen (21, 22) magnetisch gekoppelten, eine endseitige, mindestens abschnittsweise gewölbte zweite Stirnfläche (241) aufweisenden ferromagnetischen zweiten Spulenkern (24) umfaßt, und
- eine erste Elektrode (31) und eine zweite Elektrode (32) für das Abgreifen einer Spannung vom elektrischen Feld,
- wobei ein erster und ein zweiter Spulenkern-Sitz in den Stützkörper mit einer vorgebbaren Tiefe eingeformt sind,
-- wobei der erste Spulenkern (23) mit einem von dessen Stirnfläche (231) ausgehenden, endseitigen ersten Spulenkern-Abschnitt (232) durch eine erste Mantel-Öffnung (113) des Trägerrohrs (11) hindurch in den ersten Spulenkern-Sitz (14) des Stützkörpers (13) so eingesetzt ist, daß die erste Stirnfläche (231) an einer ersten Fläche des Spulenkern-Sitzes (14) formschlüssig anliegt und
-- wobei der zweite Spulenkern (24) mit einem von dessen Stirnfläche (241) ausgehenden, endseitigen zweiten Spulenkern-Abschnitt (242) durch eine zweite Mantel-Öffnung (114) des Trägerrohrs (11) hindurch in den zweiten Spulenkern-Sitz (15) des Stützkörpers (13) so eingesetzt ist, daß die zweite Stirnfläche (241) an einer zweiten Fläche des Spulenkern-Sitzes (15) formschlüssig anliegt.

2. Durchflussaufnehmer nach Anspruch 1, bei dem der erste Spulenkern-Sitz (14) den ersten Spulenkern-Abschnitt (232) bzw. der zweite Spulenkern-Sitz (15) den zweiten Spulenkern-Abschnitt (242) wenigstens abschnittsweise formschlüssig umgreift.

3. Durchflussaufnehmer nach Anspruch 1 oder 2, bei dem der erste Spulenkern-Abschnitt (232) bzw. der zweite Spulenkern-Abschnitt (242) polschuhartig ausgebildet ist.

4. Durchflussaufnehmer nach einem der vorherigen Ansprüche, bei dem der Stützkörper (13) ein, insb. direkt im Trägerrohr, gesintertes, insb. aus mehreren Sinter-Schichten aufgebautes, Formteil ist.

5. Durchflussaufnehmer nach einem der vorherigen Ansprüche, bei dem der Liner (12) ein Gussteil oder ein Spritzgußteil ist, das den ersten und den zweiten Spulenkern (23, 24) wenigstens abschnittsweise formschlüssig umgreift.

6. Durchflussaufnehmer nach dem vorherigen Anspruch, bei dem die erste Spule (21) auf dem ersten Spulenkern (23) bzw. die zweite Spule (22) auf dem zweiten Spulenkern (24) angeordnet und wenigstens teilweise in das Isoliermaterial des Liners (12) eingebettet ist.

## Claims

1. Electromagnetic flow rate sensor, comprising:
- a measuring tube (1) which has a first end on the inlet side and a second end on the outlet side and can be inserted into a pipe in a pressure-tight manner, said measuring tube having
-- a non-ferromagnetic support tube (11) serving as an outer cover of the measuring tube (1),
-- a tubular liner (12) made from an insulating material and accommodated in a cavity of the support tube (11), said liner being designed to conduct a flowing fluid which is insulated from the support tube (11), and
-- an open-pore support body (13) designed to stabilize the liner (12) and incorporated into said liner,
- a magnetic circuit arrangement (2) arranged on the measuring tube (1), designed to generate and guide a magnetic field which induces an electrical field in the flowing fluid, said circuit comprising
-- a first coil (21),
-- a second coil (22),
-- a first ferromagnetic coil core (23) magnetically coupled with the coils (21, 22), having at an end a first front face (231) which is curved at least in part, and
-- a second ferromagnetic coil core (24) magnetically coupled with the coils (21, 22), having at an end a second front face (241) which is curved at least in part, and
- a first electrode (31) and a second electrode (32) for tapping a voltage of the electric field,
- wherein a first and a second coil core seat are formed in the support body with a predefinable depth,
-- wherein the first coil core (23) is introduced, with a first end-side coil core section (232) starting from the front face (231), through a first jacket opening (113) of the support tube (11) and into the first coil core seat (14) of the support body (13) in such a way that the first front face (231) rests with positive locking on a first surface of the coil core seat (14), and
-- wherein the second coil core (24) is introduced, with a second end-side coil core section (242) starting from the front face (241), through a second jacket opening (114) of the support tube (11) and into the second coil core seat (15) of the support body (13) in such a way that the second front face (241) rests with positive locking on a second surface of the coil core seat (15).

2. Flow sensor as claimed in Claim 1, wherein the first coil core seat (14) surrounds the first coil core section (232) or the second coil core seat (15) surrounds the second coil core section (242) with positive locking at least in sections.

3. Flow sensor as claimed in Claim 1 or 2, wherein the first coil core section (232) and the second coil core section (242) are designed as pole pieces.

4. Flow sensor as claimed in one of the previous claims, wherein the support body (13) is a molded part which is sintered particularly directly in the support tube, and consists particularly of multiple sinter layers.

5. Flow sensor as claimed in one of the previous claims, wherein the liner (12) is a cast part or an injection molded part which surrounds the first and the second coil core (23, 24) at least partially with positive locking.

6. Flow sensor as claimed in the previous claim, wherein the first coil (21) is arranged on the first coil core (23) or the second coil (22) is arranged on the second coil core (24), and is embedded at least partially in the insulation material of the liner (12).

## Revendications

1. Débitmètre magnéto-inductif, comprenant :
- un tube de mesure (1) insérable de façon étanche à la pression dans une conduite, présentant côté entrée une première extrémité et côté sortie une deuxième extrémité, lequel tube comporte
-- un tube support (11) non ferromagnétique servant d'enveloppe extérieure du tube de mesure (1),
-- un liner (12) tubulaire constitué d'un matériau isolant, logé dans un canal intérieur du tube support (11), lequel liner est destiné à acheminer un fluide en écoulement et est isolé par rapport au tube support (11), et
-- un corps d'appui (13) à pores ouverts destiné à la stabilisation du liner (12) et incorporé dans ce dernier,
- un circuit magnétique (2) disposé sur le tube de mesure (1), destiné à générer et à guider un champ magnétique, qui induit un champ électrique dans le fluide en écoulement, lequel circuit comprend
-- une première bobine (21),
-- une deuxième bobine (22),
-- un premier noyau de bobine ferromagnétique (23) couplé magnétiquement aux bobines (21, 22), présentant une surface frontale d'extrémité (231) au moins partiellement bombée, et
-- un deuxième noyau de bobine ferromagnétique (24) couplé magnétiquement aux bobines (21, 22), présentant une surface frontale d'extrémité (241) au moins partiellement bombée, et
- une première électrode (31) et une deuxième électrode (32) pour le prélèvement d'une tension du champ électrique,
- un premier et un deuxième logement de noyau de bobine étant formés dans le corps d'appui avec une profondeur prédéfinissable,
-- le premier noyau de bobine (23) étant introduit avec une première section de noyau de bobine d'extrémité (232) partant de l'une des ses surfaces frontales (231), à travers une première ouverture d'enveloppe (113) du tube support (11), dans le premier logement de noyau de bobine (14) du corps support (13), de telle sorte que la première surface frontale (231) repose par complémentarité de forme contre une première surface du logement de noyau de bobine (14), et
-- le deuxième noyau de bobine (24) étant introduit avec une deuxième section de noyau de bobine d'extrémité (242) partant de l'une des ses surfaces frontales (241), à travers une deuxième ouverture d'enveloppe (114) du tube support (11), dans le deuxième logement de noyau de bobine (15) du corps support (13), de telle sorte que la deuxième surface frontale (241) repose par complémentarité de forme contre une deuxième surface du logement de noyau de bobine (15).

2. Débitmètre selon la revendication 1, pour lequel le premier logement de noyau de bobine (14) entoure au moins partiellement par complémentarité de forme la première section de noyau de bobine (232) ou pour lequel le deuxième logement de noyau de bobine (15) entoure au moins partiellement par complémentarité de forme la deuxième section de noyau de bobine (242).

3. Débitmètre selon la revendication 1 ou 2, pour lequel la première section de noyau de bobine (232) et la deuxième section de noyau de bobine (242) sont formées en tant qu'épanouissement polaire.

4. Débitmètre selon l'une des revendications précédentes, pour lequel le corps d'appui (13) est une pièce formée, notamment directement dans tube le support, et frittée, notamment selon plusieurs couches de frittage.

5. Débitmètre selon l'une des revendications précédentes, pour lequel le liner (12) est une pièce en fonte moulée ou moulée par injection, qui entoure le premier et le deuxième noyau de bobine (23, 24) au moins partiellement par complémentarité de forme.

6. Débitmètre selon la revendication précédente, pour lequel la première bobine (21) est disposée sur le premier noyau de bobine (23) ou la deuxième bobine (22) sur le deuxième noyau de bobine (24), et incorporée au moins partiellement dans le matériau isolant du liner (12).
